# EUROPÄISCHE PATENTANMELDUNG

(11) **EP 2 500 082 A1**
(43) Veröffentlichungstag der Anmeldung: **19.09.2012**
(21) Anmeldenummer: 12001384.2
(22) Anmeldetag: 01.03.2012
(51) Int. Cl.: B01D 53/56, B01D 53/50, B01D 53/60

(54) **Verfahren und Anlage zur Rauchgasentstickung**

(30) Priorität: 15.03.2011 DE 102011014007
(71) Anmelder: Linde Aktiengesellschaft, 80331 München (DE)
(72) Erfinder: Schödel, Nicole, 81477 München (DE); Winkler, Florian, 80339 München (DE)
(74) Vertreter: Kasseckert, Rainer

(57) **Zusammenfassung**

Die Erfindung betrifft ein Verfahren zur Abreicherung von Stickoxiden aus einem sauerstoffhaltigen Gasstrom, wobei der Gasstrom in einem Reduktionsschritt mit einer Ammoniak und Ammoniumsulfit enthaltenden Waschlösung in Kontakt gebracht wird, wodurch im Gasstrom enthaltenes NO₂ zu N₂ reduziert wird, und im Gasstrom enthaltenes Stickstoffmonoxid in einem NO-Eliminierungsschritt mit Ammoniak und Sauerstoff zu Ammoniumnitrit umgesetzt wird, wobei die Umsetzung des Stickstoffmonoxids im NO-Eliminierungsschritt bei erhöhtem Druck erfolgt. Ebenso wird eine Anlage zum Betrieb des erfindungsgemäßen Verfahrens gezeigt.

## Beschreibung

Die vorliegende Erfindung betrifft ein Verfahren und eine Anlage zur Entfernung von Stickstoffoxiden aus Verbrennungsabgasen gemäß den Oberbegriffen der unabhängigen Ansprüche.

Die bei der Verbrennung von kohlenstoffhaltigen Energieträgern anfallenden Abgase müssen von Schwefel- und Stickoxiden gereinigt werden. In der Kraftwerkstechnik hat sich die selektive katalytische Reduktion (SCR) zur Entfernung von Stickoxiden (NOₓ) durchgesetzt, bei der Stickoxide mit einem Reduktionsmittel wie Harnstoff oder Ammoniak an einem Katalysator, z.B. Vanadium-Titanoxid, umgesetzt werden. Zur Entfernung von Schwefeloxiden (SOₓ) wird verbreitet das semi-trockene Verfahren angewendet.

Ein weiteres bekanntes Verfahren zur Abtrennung von Stickoxiden und Schwefeloxiden ist das Walter-Simultan-Verfahren. Dieses Verfahren ist dreistufig und arbeitet mit Ammoniak und Ozon. In der ersten Stufe wird das SOₓ mit einer ammoniakalkalischen Wäsche entfernt:

SO₂ + 2 NH₃ + H₂O → (NH₄)₂SO₃

SO₃ + 2 NH₃ + H₂O → (NH₄)₂SO₄

Je nach Verweilzeit und Sauerstoffgehalt wird das Sulfit zusätzlich zu Sulfat oxidiert. In der zweiten Stufe wird das NOₓ mit ozonhaltigem Wasser ausgewaschen und mit Ammoniak zu Ammoniunnitrit und -nitrat umgesetzt. Durch den vorhandenen Luftsauerstoff wird das Nitrit zu Nitrat oxidiert:

NO + O₃ → NO₂ + O₂

2 NO₂ + 2 NH₃ + H₂O → NH₄NO₂ + NH₄NO₃

NH₄NO₂ + 0,5 O₂ → NH₄NO₃

In einer dritten Stufe wird zur Sicherung das durchgebrochene NO₂ und O₃ zu O₂ und N₂ reduziert:

2 NO₂ + 4 (NH₄)₂SO₃ → N₂ + 4 (NH₄)₂SO₄

O₃ + (NH₄)₂SO₃ → (NH₄)₂SO₄ + O₂

Eine Vereinfachung dieses Verfahrens stellt das in der DE102008062496A1 gezeigte Verfahren dar. Durch die Verwendung hoher Drücke bei der alkalischen Wäsche entfällt die Zufuhr von Ozon, da NO bereits durch den vorhanden Sauerstoff zu NO₂ oxidiert wird.

2 NO + O₂ → NO₂

Dieses NO₂ wird von der ammoniakalkalischen Waschlösung in Gegenwart von NO zu Nitrit umgesetzt:

NO + NO₂ + 2 NH3 + H₂O → 2 NH₄NO₂

Bei hohen NO₂-Werten entsteht Nitrat durch folgende Konkurrenzreaktion:

2 NO₂ + 2 NH3 + H₂O → NH₄NO₂ + NH₄NO₃

Durch die thermische Reduktion können die Nitrite zu Stickstoff umgesetzt werden:

NH₄NO₂ → N₂ + 2 H₂O

Durch die Verwendung hoher Drücke in diesem Verfahren entsteht jedoch auch vermehrt NO₂ und Nitrat beim Auswaschen, welches nicht mehr thermisch reduziert werden kann und als Salz abgeschieden werden muss.

Prinzipiell entsteht bei der Kopplung der Verfahren eine Ammoniumsulfatlösung, die als Düngemittel eingesetzt werden kann. Beruhend auf der Tradition der Gipsherstellung aus Schwefeloxiden in Rauchgasen kann diese Lösung auch in Gips umgesetzt werden. Hierzu kann das Doppelalkaliverfahren verwendet werden. Dabei wird durch Austauschen des alkalischen Mediums Gips aus einer Ammoniumsulfatlösung gefällt:

(NH₄)₂SO₄ + CaO → 2 NH₃ + CaSO₄ + H₂O

Das traditionell wichtigste Entschwefelungsverfahren ist die Umsetzung von SOₓ durch Kalkwäschen zu Gips. Die Doppelalkali Prozesse haben sich trotz geringerer Störanfälligkeiten nicht gegenüber Kalkwäschen durchgesetzt.

Das Oxyfuel-Verfahren verwendet zur Verbrennung Sauerstoff-angereicherte Luft oder reinen Sauerstoff. Da der bei diesem Verfahren entstehende Abgasstrom im Wesentlichen aus Kohlendioxid besteht, ist das Verfahren im Zusammenhang mit Strategien zur Sequestrierung oder Nutzung des CO₂ von Interesse und wird intensiv entwickelt.

Die Entwicklung solcher Verbrennungsverfahren und die Abtrennung von CO₂ zur CO₂-Ausstoßminimierung bieten neue Möglichkeiten für die Schadstoffentfernung aus Rauchgasen. Die nasschemische Entfernung von Stickoxiden scheiterte in konventionellen Verbrennungsprozessen an den hohen Betriebsmittelkosten für die NO-Oxidation (Katalysator, Ozon oder H₂O₂). Diese Oxidation kann, wie in DE102008062496A1 beschrieben, durch den erhöhten Druck bei Oxyfuel-Verfahren in der NOₓ-Wäsche selbständig ablaufen.

Vor diesem Hintergrund ist es die Aufgabe der vorliegenden Erfindung, Mittel und Verfahren zur Verfügung zu stellen, die eine apparativ einfache und ökonomisch tragfähige Entfernung von Stick- und Schwefeloxiden aus Rauchgas ermöglichen. Diese Aufgabe wird durch die Gegenstände der unabhängigen Ansprüche gelöst.

Die Erfindung beruht auf dem Prinzip, Stickoxide aus einem Abgasstrom durch Auswaschen mit einem basischen Waschmittel zu entfernen, wobei Stickstoffdioxid ohne Mitwirkung eines Katalysators durch in der Waschlösung enthaltenes Sulfit reduziert wird.

Gemäß einem ersten Aspekt der Erfindung wird dazu ein Verfahren zur Abreicherung von Stickoxiden aus einem sauerstoffhaltigen Gasstrom zur Verfügung gestellt. Der Gasstrom wird in einem Reduktionsschritt mit einer Ammoniak und Ammoniumsulfit enthaltenden Waschlösung in Kontakt gebracht, wodurch im Gasstrom enthaltenes NO₂ zu N₂ reduziert wird. In einem bevorzugt nachgeschaltet ablaufenden NO-Eliminierungsschritt wird dazu im Gasstrom enthaltenes Stickstoffmonoxid mit Ammoniak und Sauerstoff zu Ammoniumnitrit umgesetzt. Die Umsetzung des Stickstoffmonoxids im NO-Eliminierungsschritt erfolgt dabei bei erhöhtem Druck. Erhöhter Druck im Verständnis der vorliegenden Beschreibung bedeutet mindestens 2 bar. 10 bis 40 bar sind bevorzugt, noch bevorzugter sind 20 - 27 bar.

Der Gasstrom ist dabei bevorzugt der Abgasstrom einer Oxyfuel-Anlage, es kommen aber auch andere industrielle Prozesse in Betracht, bei welchen NOₓ und SOₓ enthaltende Abgase entstehen und gereinigt werden müssen. Besonders bevorzugt ist dabei ein Sauerstoffgehalt von mindestens 3% im Abgasstrom. Der Gasstrom enthält also neben Sauerstoff sowie den abzutrennenden Verunreinigungen an SOₓ und NOₓ mindestens Kohlendioxid, sowie ggf. Stickstoff, weitere Luftbestandteile und Verbrennungsprodukte. Die hier angeführten Waschlösungen können nicht nur die bezeichneten Stoffe enthalten, sondern auch weitere Stoffe. Der Fachmann erkennt, dass das Wort "enthält" hier also nicht im ausschließenden Sinne verwendet wird.

Gemäß einer bevorzugten Ausführungsform der Erfindung wird die.Ammoniumsulfit enthaltende Waschlösung aus einem dem Reduktionsschritt vorgeschalteten proximalen Waschschritt gespeist, in welchem der Gasstrom mit einer ammoniakhaltigen Waschlösung in Kontakt gebracht wird. Dadurch kann das Produkt der (proximalen) ammoniakalischen Wäsche des Gasstroms, die ammoniumsulfithaltige Waschlösung, zur Reduktion des Stickstoffdioxids verwendet werden.

Weiter bevorzugt ist eine Ausführungsform der Erfindung, bei welcher das im NO-Eliminierungsschritt gebildete Ammoniumnitrit in einer thermischen Reduktionsstufe mit Ammoniak zu Stickstoff umgesetzt wird. Bevorzugt ist diese thermische Reduktionsstufe der (unteren) Gegenstromkolonne angeschlossen.

Weiter bevorzugt ist eine Ausführungsform der Erfindung, bei welcher Ammoniumsulfat mit Kalziumoxid aus der Waschlösung unter Freisetzung von Ammoniak gefällt und der dabei freigesetzte Ammoniak der im Reduktionsschritt, dem NO-Eliminerungsschritt und/oder dem vorgeschalteten Waschschritt eingesetzten Waschlösung zugeführt wird. Der bei der Fällung als Festkörper anfallende Gips kann wirtschaftlich verwertet werden. Der dabei entstehende Ammoniak hingegen kann je nach Anlage bzw. Verfahrensführung entweder einem der Entstickung vorgeschalteten Entschwefelungsprozess zugeführt werden, wo er das Ammoniumsulfit erzeugt, oder direkt in einen Entstickungs- oder NOₓ/SOₓ-Kombinationsprozess eingebracht werden.

Der NO-Eliminierungsschritt wird bevorzugt bei einer Temperatur von 10 bis 50°C und einem Druck von 10 bis 40 bar, bevorzugt bei einem Druck von 20 - 27 bar betrieben. Der Reduktionsschritt wird gemäß einer bevorzugten Ausführungsform bei einer Temperatur von 50 bis 95°C und einem Druck von 10 bis 40bar, bevorzugt bei einem Druck von 20 - 27bar betrieben. Er kann aber auch im bevorzugten Temperaturbereich des NO-Eliminierungssschrittes betrieben werden.

Gemäß einer bevorzugten Ausführungsform wird in einem Membrantrennschritt mindestens ein Teil des im Abgasstrom enthaltenen Kohlendioxids durch eine Membran abgetrennt, bevor der sauerstoffhaltige Gasstrom im ersten Reduktionsschritt mit der Waschlösung in Kontakt gebracht wird. Diese Ausführungsform kommt für Sequestrierungsverfahren besonders in Frage, bei denen das Kohlendioxid durch eine Membran abgetrennt wird.

Gemäß einer bevorzugten Verfahrensalternative dieser Ausführungsform erfolgt der proximale Waschschritt vor dem Membrantrennschritt in einem separaten Wäscher. Alternativ kann auch die Abtrennung von SOₓ in einem Reaktor zusammen mit den Stickoxiden erfolgen.

Gemäß eines weiteren Aspektes der Erfindung wird eine Anlage zur Durchführung des erfindungsgemäßen Verfahrens zur Verfügung gestellt. Eine solche Anlage umfasst eine untere Gas-flüssig-Gegenstromkolonne mit einer unteren Gaszuleitung für einen Abgasstrom, einer in Richtung des Gasstroms hinter der unteren Gaszuleitung angeordneten unteren Kontaktzone, einer unteren Waschlösungszuleitung für eine Ammoniak und Ammoniumsulfit enthaltende Waschlösung und einer in Richtung des Gasstroms hinter der Kontaktzone angeordneten ersten Gasableitung, sowie einer unteren Flüssigkeitsableitung, mit der die Waschlösung aus der unteren Kolonne abgeführt wird. Weiterhin umfasst sie eine in Richtung des Gasstroms hinter der ersten Gasableitung angeordnete obere Gas-flüssig-Gegenstromkolonne mit einer oberen Waschlösungszuleitung für eine Ammoniak enthaltende Waschlösung, einer oberen Kontaktzone und einer oberen Flüssigkeitsableitung. Die Kontaktzone sind jeweils so ausgestaltet, dass ein möglichst inniger Austausch zwischen Abgasstrom und Waschlösung stattfindet.

Die obere Gas-flüssig-Gegenstromkolonne ist dabei in einem für den Betrieb bei 10 bis 50bar Überdruck ausgelegten Druckbehälter angeordnet, und die untere Flüssigkeitsableitung ist mit einer Vorrichtung zur thermischen Nitritzersetzung und/oder einer Vorrichtung zur Fällung von in der entnommenen Flüssigkeit enthaltenem Sulfat verbunden.

Vorzugsweise sind die untere und die obere Gas-flüssig-Gegenstromkolonne im selben Druckbehälter angeordnet, bilden also zusammen einen Stickoxid-Wäscher.

Bevorzugt können die obere und die untere Gas-flüssig-Gegenstromkolonne bei verschiedenen Temperaturen betrieben werden. Dies ermöglicht die getrennte Wahl von die in den jeweiligen Kolonnen ablaufenden Teilreaktionen begünstigenden Temperaturen.

Diese Anlagenführung ermöglicht die Reaktion des im ungereinigten Abgasstrom enthaltenen NO₂ mit Ammoniumsulfit zu Stickstoff und Ammoniumsulfat. Das Ammoniumsulfit entsteht dabei entweder durch Reaktion des im ungereinigten Abgasstroms enthaltenen Schwefeldioxid mit dem in der Waschlösung enthaltenen Ammoniak, oder wird wie nachstehend beschrieben in einer separaten, vor (proximal zum Verbrennungskessel) der Entstickung gelegenen SOₓ-Wäscher (proximale Kolonne) gewonnen.

Gemäß einer alternativen bevorzugten Ausführungsform dieses Aspekts der Erfindung wird vor die Entstickung ein proximaler Waschschritt zur Entfernung des SOₓ gesetzt. Dabei ist die untere Waschzuleitung mit einer proximalen Gegenstromkolonne verbunden, welche eine proximale Gaszuleitung für einen Abgasstrom, einer in Richtung des Gasstroms hinter der Zuleitung angeordneten proximalen Kontaktzone, einer proximale Waschlösungszuleitung für eine Ammoniak enthaltende Waschlösung und einer in Richtung des Gasstroms hinter der proximalen Kontaktzone angeordneten proximalen Gasableitung aufweist. Die Kontaktzone ist so ausgestaltet, dass ein möglichst inniger Austausch zwischen Abgasstrom und Waschlösung stattfindet. Die dieser Kolonne zugeordnete proximale Flüssigkeitsableitung ist mit der unteren Waschlösungszuleitung der unteren Kontaktzone verbunden, so dass das der proximalen Kolonne entströmende ammoniumsulfithaltige Waschwasser der unteren Entstickungskolonne zugeleitet wird. Das der proximalen Gasableitung entströmende Gas wird bei dieser Ausführungsform der unteren Gaszuleitung der unteren Entstickungskolonne zugeleitet.

Gemäß einer weiteren bevorzugten Ausführungsform ist die Vorrichtung zur Fällung von in der entnommenen Flüssigkeit enthaltenem Sulfat mit der unteren Waschlösungszuleitung so verbunden, dass die nach der Fällung von enthaltenem Sulfat anfallende Lösung der unteren Gegenstromkolonne der Entstickung zugeführt werden kann. Diese Anlagenform ist dann bevorzugt, wenn keine separate (proximale) Entschwefelungskolonne verwendet wird.

Gemäß einer alternativen bevorzugten Ausführungsform ist die Vorrichtung zur Fällung von in der entnommenen Flüssigkeit enthaltenem Sulfat mit der proximalen Waschlösungszuleitung so verbunden, dass die nach der Fällung von enthaltenem Sulfat anfallende Lösung der proximalen Gegenstromkolonne zugeführt werden kann.

Die Eingliederung der Ammoniumsulfitlösung zur Reduktion des NO₂ in der unter Druck betriebenen NOₓ-Wäsche nützt bestehende Synergien. Zugleich verhilft sie der NOₓ-Wäsche zu hohen Nitritselektivitäten, da die Nitratbildung aus NO₂ unterdrückt wird.

Nitrite sind thermisch nicht stabil und können unter hoher Temperatur zu Stickstoff umgesetzt werden. Die Ammoniumsulfitlösung unterstützt die Nitritselektivität in der NOₓ-Wäsche. Ohne Ammoniumsulfit erreicht man hohe Nitritselektivitaten nur bei niedrigen NO₂ Gehalten, bezogen auf den Gesamtgehalt an NOₓ im Gas. Dies ist nur bei relativ niedrigen Drücken möglich (7-15bar). Dies hat einen niedrigen NO-Umsatz zur Folge und verursacht höhere Dimensionen hinsichtlich der als Wäscher verwendeten Anlagenteile. Für höhere NOₓ-Umsätze bei kleiner Bauweise ist der Einbau der NOₓ-Wäsche bei höheren Drücken günstiger, jedoch verliert man durch die hohen NO₂ Gehalte bei höheren Drücken an Nitritselektivität und eine Regeneration des Waschmittels ist nur noch bedingt möglich. Durch den Einsatz der Ammoniumsulfitlösung kann die NOₓ-Wäsche auch in höheren Druckbereichen nitritselektiv betrieben werden, da das NO₂ durch die Sulfitlösung bereits zu N₂ reduziert wird und nicht zu Nitrat umgesetzt werden kann.

Die Reduktion des Waschmittels einer nitritselektiven Wäsche verbraucht Ammoniak. Pro Mol Nitrit wird ein Mol Ammoniak benötigt. Da Ammoniumsulfit zu Ammoniumsulfat aufoxidiert wird und dabei NO₂ zu Stickstoff reduziert wird, wird für diesen Teil der NOₓ kein Ammoniak benötigt, weder zur Absorption noch zur Reduktion der aus der NO₂-Absorption resultierenden Nitrite. Der Einsatz einer Ammoniumsulfitlösung verringert somit den Ammoniakverbrauch der NOₓ-Wäsche.

Die Ammoniumnitritreduktion verläuft effektiver mit steigenden Ammoniakgehalten und sinkenden pH Werten. Bei der Ammoniumnitritreduktion wird Ammoniak verbraucht und somit sinkt die Zersetzungsrate mit abnehmender Ammoniumnitritkonzentration. Dies führt dazu, dass in der Lösung immer ein gewisser Ammoniumnitritrest bestehen bleibt. Durch die zusätzliche Ammoniumfracht aus der Entschwefelung stehen wesentlich höhere Mengen an Ammoniak zur Verfügung und die Zersetzungsreaktion verläuft wesentlich schneller und erreicht zusätzlich niedrigere Nitritlevel.

Die Reduktion von NO₂ durch Ammoniumsulfit setzt einen Überschuss von SOₓ gegenüber NOₓ voraus. In Rauchgasen von Kraftwerken ist dies gegeben. Jedoch durch den hohen Sauerstoffanteil wird Ammoniumsulfit relativ rasch zu Sulfat weiter oxidiert, sodass eine Reduktion von NO₂ nur noch bedingt möglich ist. Eine Ausführungsform der Erfindung eignet sich besonders für den Einsatz in Oxyfuel Kraftwerken, bei welcher eine vorgeschaltete (proximale) Entschwefelungskolonne vor die Rückführung der Brenngase ("Recycle") zum Kessel geschaltet wird. In den unbehandelten Abgasen befindet sich die höchste SO₂ Fracht bei prozessbedingt niedrigen Sauerstoffgehalten. Dort ist eine SOₓ-Wäsche am sinnvollsten, damit die Sauergase nicht in den Kessel zurückgelangen und sich im Recycle aufkonzentrieren.

NOₓ hingegen konzentriert sich bei Oxyfuel-Anlagen trotz Recycle nicht auf, so dass bei Oxyfuelprozessen das Verhältnis der Schwefelfracht zur Stickstofffracht wesentlich höher ausfällt im Vergleich zu konventionellen Kohlekraftwerken. Dieser Umstand und die geringen Sauerstoffgehalte im Rauchgas begünstigen einen Prozess zur Nutzung von Ammoniumnitritlösungen zur NOₓ-Reduktion zu Stickstoff. Alternativ kommt die vorliegende Erfindung auch zur Reinigung von CO₂ aus konventionellen Kraftwerken (z.B. kohlebasierten Kraftwerken) in Frage, bei denen das CO₂ durch Membranabtrennung in Rauchgasen gewonnen wird. Aufgrund der Trenneigenschaften derartiger Membranen, die keine 100% Selektivität aufweisen, gelangen auch entsprechende Verunreinigungen und Sauerstoff in das CO₂-Produkt. Zur Weiterverwendung müssen diese Verunreinigungen entfernt werden, um Produktspezifikationen zu erreichen und Korrosionsprobleme zu vermeiden.

### Figurenbeschreibung

- Fig. 1:: zeigt Anlagenschemata (A) einer konventionellen Schadstoffentfernung aus Rauchgasen z.B. in Oxyfuelanlagen; (B) eine hypothetische Realisierung des Walter-Prozesses in einer solchen Anlage und (C) eine Ausführungsform der erfindungsgemäßen Anlage bzw. des erfindungsgemäßen Prozesses.
- Fig. 2:: zeigt den Stickoxidwäscher als Teil einer bevorzugten Ausführungsform der erfindungsgemäßen Anlage.
- Fig. 3:: zeigt eine bevorzugte Ausführungsform der erfindungsgemäßen Anlage mit separater Entschwefelungskolonne.
- Fig. 4:: zeigt eine weitere bevorzugte Ausführungsform der erfindungsgemäßen Anlage mit integrierter Entstickungs- und Entschwefelungskolonne.
- Fig. 5:: zeigt das Anlagenschema der Integration in einen Membranprozess.

### Beispiele

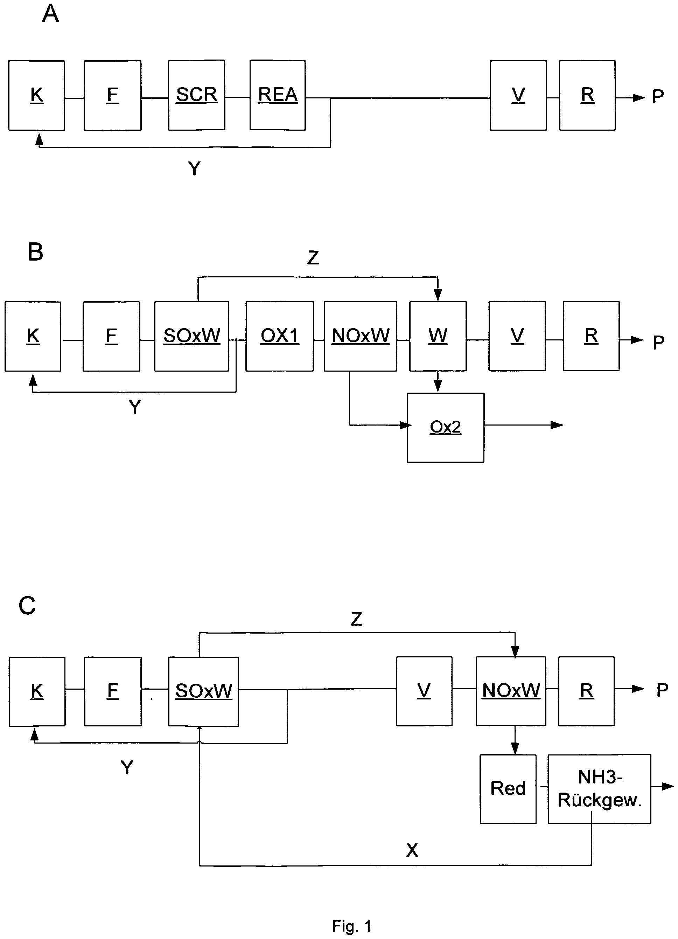

Würde man eine konventionelle Schadstoffentfernung aus Rauchgasen z.B. in Oxyfuelanlagen einbauen, würde die in Fig. 1 A gezeigte Schaltung generiert werden. Dabei wird Rauchgas eines Verbrennungskessel K zunächst durch eine Filtereinheit F entstaubt. In einer nachfolgenden Selektiven katalytischen Reduktionseinheit SCR werden die Stickoxide reduziert und anschließend in einer Entschwefelungseinheit REA entschwefelt. Das gereinigte Gas durchläuft nun einen Verdichter V und einen CO₂-Abscheider R. Ein Teil der geeinigten Abgase wird über eine Rücklaufleitung Y zum Verbrennungskessel zurückgeführt. P = CO₂-Produkt.

In Fig. 1 B ist eine Schadstoffentfernung aus Rauchgasen mit integriertem nasschemischem Walter-Verfahren dargestellt. Das Rauchgas eines Kessels K wird zunächst durch eine Filtereinheit F entstaubt. Danach werden in einer Wascheinheit SOxW Schwefeloxide ammoniakalisch abgetrennt und anschließend in einer Oxidationseinheit OX1 die Stickoxide durch Ozon oxidiert. Danach erfolgt eine ammoniakalische Wäsche der Stickoxide in einer Wascheinheit NOxW. Verbliebenes Ozon und NO₂ wird in der Einheit W beseitigt. Das gereinigte Gas wird anschließend in der Einheit V verdichtet und im CO₂-Abscheider R von CO₂ befreit. Nitrite und Sulfit aus den Einheiten NOxW und W werden in einer Oxidationseinheit OX2 zu Nitrat und Sulfat oxidiert. Diese könne zu Dünger weiterverarbeite werden. Ein Teil der gereinigten Abgase wird über die Rücklaufleitung Y zum Kessel zurückgeleitet. Z = ammoniumsulfithaltiges Waschwasser.

Die erfindungsgemäße Anlage führt mindestens eine Stufe der Schadstoffentfernung bei hohem Druck durch und nutzt zusätzliche die Ammoniumsulfitfracht zur Nitritselektivitäterhöhung und NO₂-Reduktion. Die Verlagerung in den Druckteil z.B. von Sequestrierungsanlagen bedeutet dabei keinen Mehraufwand, da der Druck auch für die Sequestrierung oder den Transport erzeugt wird.

In Fig. 1 C ist die Schadstoffentfernung von Rauchgasen gemäß einer bevorzugten Ausführungsform der Erfindung dargestellt. Rauchgas eines Kessels K wird zunächst in einer Filtereinheit F entstaubt und in einer Wascheinheit SOxW vom SOx gereinigt. Dabei entsteht Ammoniumsulfit und Ammoniumsulfat. Nach der Verdichtung des Gases in V erfolgt die automatische Oxidation von NO in NO₂. CO₂ wird vom gereinigten Gas in Einheit R abgeschieden. Ein Teil des von Schwefeloxiden gereinigtes Gases wird über die Leitung Y in den Kessel zurückgeführt. NO₂ wird in einer Einheit NOxW durch in der SOxW-Anlage gebildetes Ammoniumsulfit (Z) zu N₂ reduziert, wobei das Ammoniumsulfit zu Ammoniumsulfat oxidiert wird. Überschüssiges NO₂ bildet mit dem vorhanden NO Nitrite, die in einer Einheit Red thermisch zu elementaren Stickstoff reduziert werden. Ammoniak wird über Fällung der Sulfate zu Gips regeneriert und den Prozess wieder zugeführt (X).

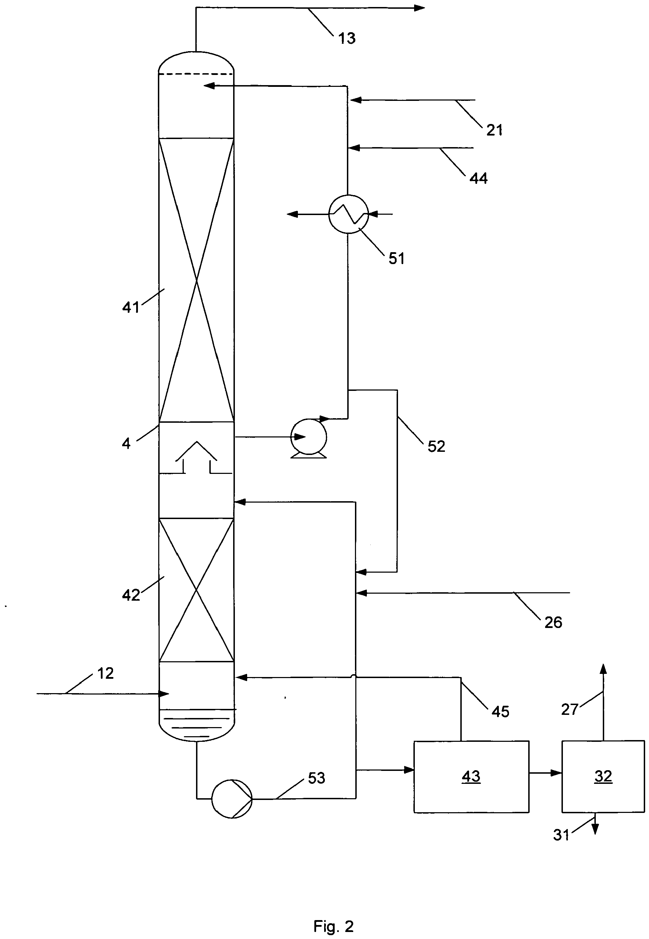

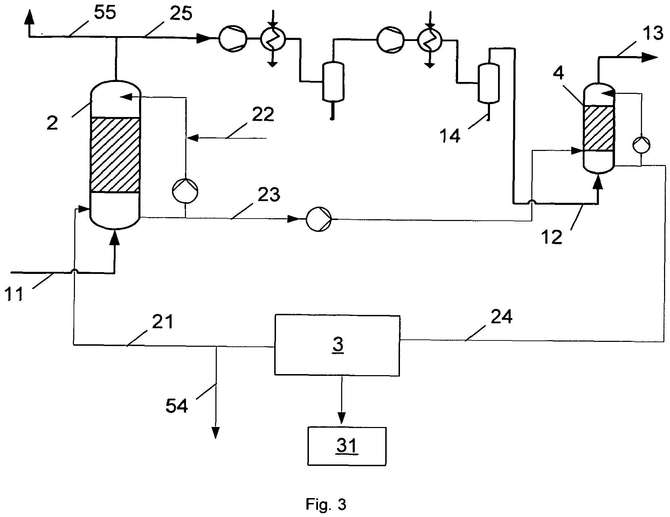

Die in Fig. 2 und 3 gezeigten Anlagen zeigen bevorzugte Anlagen- und Verfahrensformen. Das Rauchgas 11 wird von SOₓ gereinigt und bildet Ammoniumsulfit und Ammoniumsulfat in der ersten Wäsche (SOxW) 2. Nach der Verdichtung des Gases zu komprimiertem Rauchgas 12 erfolgt die automatische Oxidation von NO zu NO₂ im Stickoxidwäscher 4. Das NO₂ wird durch die Ammoniumsulfitlösung 26 zu N₂ reduziert und das Ammoniumsulfit zu Ammoniumsulfat aufoxidiert. Überschüssiges NO₂ bildet mit vorhandenem NO Nitrite, die in der thermischen Reduktionsstufe 43 zu Stickstoff umgesetzt werden. Die dabei gebildeten Gase 45 werden in die untere Kolonne 42 zurückgeleitet. Wie im Doppelalkaliverfahren wird das Ammoniak in der Regenerationsanlage 32 durch Fällung der Sulfate zu Gips 31 wiedergewonnen und dem Prozess zurückgeführt (X).

Als Waschmittel dient das rückgewonnene Ammoniak. Ammoniakverluste können durch Zufuhr von dem Prozess extern zugeführtem Ammoniak ("Make Up") kompensiert werden.

Die NOₓ-Wäsche 4 besteht aus zwei Teilen. Der untere Kreislauf 42 wird mit der gewonnenen Ammoniumsulfitlösung gespeist, um vorhandenes NO₂ zu N₂ zu reduzieren und die Sulfitlösung mittels O₂ und der NO₂ Reduktion aufzuoxidieren. Dieser Wäscheteil 42 kann sowohl kalt (e.g. 20 - 50°C) als auch warm (50 - 90°C) betrieben werden.

Der obere Wäscheteil 41 dient zur Eliminierung von restlichem NO zu Nitriten. Diese Reaktion wird vorzugsweise bei niedrigeren Temperaturen und hohen Drücken gefahren (20-50°C). Der pH und die Temperatur des oberen Wäschekreislaufs wird mittels der Ammoniakdosierung konstant gehalten (pH 5,5-7 vorzugsweise pH 6-6,5 bei 20-50°C). Überschüssiges Waschwasser wird in den unteren Teil der Wäsche 42 geschleust. Um hohe Umsetzungen von NOₓ zu erzielen, ist ein Einbau der Wäsche in Druckbereichen zwischen 10 und 27bar bei Sauerstoffgehalten > 3Vol% bevorzugt.

Der dem Kreislauf der Waschflüssigkeit im oberen Wäscheteil 43 entnommene Anteil ("Purge") wird in den unteren Waschkreislauf 42 geleitet. Dort werden (falls warm betrieben) die Ammoniumnitrite zu Stickstoff zersetzt. Bei ungenügender Umsetzung (z.B. durch kalten Betrieb der unteren Kolonne 42) können die vereinigten Waschlösungen einer thermischen Reduktion unterzogen werden. Dabei reduziert der im Überschuss vorhandene Ammoniak die Nitrite zu N₂ und das CO₂ wird aus dem Waschmittel freigesetzt und wieder zur Wäsche zurückgeleitet. Um niedrige Nitritwerte zu erreichen, kann die Lösung durch Wärmezufuhr zusätzlich erwärmt werden.

In der anschließenden Gipsfällung nach dem Doppelalkali Verfahren wird das Ammoniak wieder zurückgewonnen und der SOₓ-Wäsche zurückgeführt.

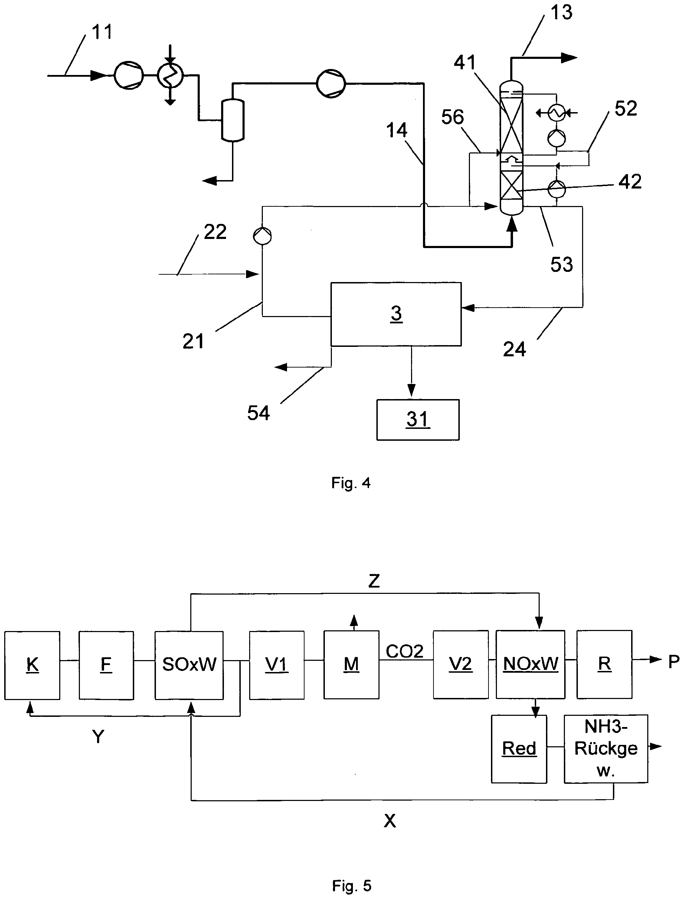

Gemäß einer weiteren Ausführungsform kann das Verfahren auch als Schwefelentfernung und Stickstoffentfernung in einer Wäsche mit zwei Kreisläufen betrieben werden, wie in Fig. 4 gezeigt.

Das warme Rauchgas 11 wird im Gegenstrom mittels einer Ammoniaklösung von SO₂ und SO₃ befreit. Bei genügend hohem Ammoniumsulfitgehalt wird das NO₂ zu Stickstoff reduziert. Der obere Kreislauf 41 dient zur Ammoniumnitritherstellung und ist pH-und temperaturkontrolliert. Die Ammoniumnitritlösung gelang über einen Purge 52 in den unteren Wäscheteil 42 und wird dort thermisch zu Stickstoff reduziert.

Aus dem Purge 53 der unteren Wäsche wird Gips aus der ammoniumsulfatreichen Lösung abgeschieden und das Waschmittel beiden Waschkreisen nach Bedarf zurückgeführt. Ammoniakverluste werden durch Make Up ersetzt. Anreicherungen von Sauergaskomponenten bzw. Verdünnung durch Kondenswasser wird durch den Purge und die Ammoniakdosierung vermieden.

Eine weitere Ausführung bezieht sich auf die Verwendung des Konzepts auf die CO₂-Membran-basierte Post Combustion Capture Anwendung (Fig. 5).

Das Rauchgas wird von SOₓ gereinigt und bildet Ammoniumsulfit und Ammoniumsulfat in der ersten Wäsche (SOxW). Nach der ersten Verdichtung des Gases (V1) erfolgt die CO₂-Abtrennung durch eine Membran (M). Noch enthaltende Stickoxide im CO₂-Produkt werden durch den Restsauerstoff von NO zu NO₂ oxidiert. Nach der zweiten Verdichterstufe (V2) verläuft diese Oxidation schneller. Das NO₂ wird durch die Ammoniumsulfitlösung (Z) in der NOxW zu N₂ reduziert und das Ammoniumsulfit zu Ammoniumsulfat aufoxidiert. Überschüssiges NO₂ bildet mit vorhandenem NO Nitrite, die in der thermischen Reduktionsstufe (Red) zu Stickstoff umgesetzt werden. Wie im Doppelalkaliverfahren wird das Ammoniak durch Fällung der Sulfate zu Gips wiedergewonnen und dem Prozess zurückgeführt (X).

Folgende Reaktionen geben einen Überblick über die chemischen Prozesse im System:
SOₓ-Wäsche:

   SO₂+ 2 NH₃+ H₂O → (NH₄)₂SO₃
NOₓ-Wäsche unterer Kreislauf:

   2 NO₂ +4 (NH₄)₂SO₃ → N₂ + 4 (NH₄)₂SO₄

   HNO₂ + NH₃ → N₂ + 2 H₂O
NOₓ-Wäsche oberer Kreislauf:

   2 NO + 0,5 O₂ + 2 NH₃+ H₂O → 2 NH₄NO₂
Thermische Nitritzersetzung:

   HNO₂ + NH₃ → N₂ + 2H₂O
Gipsfällung:

   (NH₄)₂SO₄ +CaO → 2 NH₃ (gas) + CaSO₄ + H₂O (fest)

Ein vereinfachter Prozess ist die in Fig. 3 gezeigte Schaltung. Dabei wird Ammoniumsulfit drucklos hergestellt, diese Lösung wird in der NOₓ-Wäsche als Reduktionsmittel für NO₂ über die komplette Wäsche genutzt. Das dabei entstandene Ammoniumsulfat wird als Gips gefällt und die verbleibende Ammoniumlösung der Niederdruck SOₓ-Wäsche zurückgeführt. Das Ammoniak Make Up dient dazu, Ammoniakverluste auszugleichen. Der Purge verhindert das Anreichern von Salzen wie Ammoniumchlorid, Ammoniumnitrit und Ammoniumnitrat, sowie anderen Sauergaskomponenten.

Somit gibt sich für die gesamten Reaktionsverlauf folgendes:

4 SO₂ + 8 NH₃ + 4 H₂O + 2 NO₂ 4 CaO → 4 CaSO₄ + 8 NH₃ + 4 H₂O + N₂ 4 SO₂ + 2 NO₂ + 4 CaO → 4 CaSO₄ + N₂

Formal ist somit hinsichtlich der Entfernung des Stickstoffdioxids kein Ammoniakverbrauch zu verzeichnen, ein wesentlicher Unterschied zu anderen Entstickungsverfahren, die N₂ als Endprodukt aufweisen.

Die beschriebenen Verfahrensausführungen und Anlagen weisen alle die Vorteile auf, dass im Gegensatz zur klassischen Entstickung kein Katalysator für die NOₓ-Entfernung nötig ist. Durch die Rückführung von Ammoniak aus der Gipsfällung wird der Ammoniakverbrauch für die NOₓ-Entfernung und Nitritreduktion auf den Verbrauch zur Entfernung nichtoxidierten NO beschränkt.

Im Vergleich zum Walter-Verfahren wird kein Oxidationsmittel benötigt, und die Wäsche zur Ozonentfernung entfällt. Darüber hinaus kann die Stickoxidwäsche auch bei höheren Drücken nitritselektiv betrieben werden. Als Endprodukt fällt Gips oder - bei Verzicht auf das Recycling des Ammoniaks - Ammoniumsulfat an.

Nicht zuletzt wird auch eine weniger aufwendige Bauweise durch den komprimierten Gasstrom ermöglicht.

### Bezugszeichenliste:

- 11: Gaszuleitung
- 12: Gaszuleitung für komprimiertes Rauchgas
- 13: Gasableitung für gereinigtes Rauchgas zu CO₂ Reinigung
- 14: Komprimiertes Rauchgas
- 2: Gegenstromkolonne für SOₓ-Wäsche
- 21: Ammoniakhaltige Lösung
- 22: Ammoniakzuleitung
- 23: Ammoniumsulfitlösung
- 24: Ammoniumsulfatlösung
- 25: Niederdruck SOₓ
- 26: Ammoniumsulfit von SOₓ-Wäsche
- 27: Rückfluss zu SOₓ-Wäsche
- 31: Gips
- 32: Ammoniakregeneration
- 4: Stickoxidwäscher
- 41: Obere Gas-flüssig-Gegenstromkolonne
- 42: Untere Gas-flüssig-Gegenstromkolonne
- 43: Thermische Nitritzersetzung
- 44: H₂O
- 45: Gasprodukte
- 51: Kühlvorrichtung
- 52: Obere Flüssigkeitsableitung
- 53: Untere Flüssigkeitsableitung
- 54: Flüssigkeitsableitung
- 55: Recyclingleitung zum Kessel
- 56: Zuleitung

- F: Filter
- K: Kessel
- R: Reinigung CO₂
- REA: Rauchgasentschwefelung
- Red: Reduktionsstufe zu Stickstoff
- OX 1: NOₓ-Oxidation mittels Ozon
- OX 2: Oxidation von Nitriten und Sulfiten zu Nitrat und Sulfat
- V: Verdichter
- V1: Verdichter 1
- V2: Verdichter 2
- W: Wäsche zur Ozon- und NO₂-Reinigung
- Y: Rückleitung zum Kessel
- Z: Ammoniumsulfitlösung

## Patentansprüche

1. Verfahren zur Abreicherung von Stickoxiden aus einem sauerstoffhaltigen Gasstrom, wobei
- der Gasstrom in einem Reduktionsschritt mit einer Ammoniak und Ammoniumsulfit enthaltenden Waschlösung in Kontakt gebracht wird, wodurch im Gasstrom enthaltenes NO₂ zu N₂ reduziert wird, und
- im Gasstrom enthaltenes Stickstoffmonoxid in einem NO-Eliminierungsschritt mit Ammoniak und Sauerstoff zu Ammoniumnitrit umgesetzt wird,
**dadurch gekennzeichnet, dass**
die Umsetzung des Stickstoffmonoxids im NO-Eliminierungsschritt bei einem Druck von mindestens 2 bar, vorzugsweise bei 10 bis 40 bar, noch bevorzugter bei 20 - 27 bar erfolgt.

2. Verfahren gemäß Anspruch 1, **dadurch gekennzeichnet, dass** die Ammoniumsulfit enthaltende Waschlösung aus einem dem Reduktionsschritt vorgeschalteten proximalen Waschschritt gespeist wird, in welchem der Gasstrom mit einer ammoniakhaltigen Waschlösung in Kontakt gebracht wird.

3. Verfahren gemäß einem der vorstehenden Ansprüche, **dadurch gekennzeichnet, dass** das im NO-Eliminierungsschritt gebildete Nitrit in einer thermischen Reduktionsstufe mit Ammoniak zu Stickstoff umgesetzt wird.

4. Verfahren gemäß mindestens einem der vorstehenden Ansprüche, **dadurch gekennzeichnet, dass** Ammoniumsulfat mit Kalziumoxid aus der Waschlösung unter Freisetzung von Ammoniak gefällt und der dabei freigesetzte Ammoniak dem Reduktionsschritt, dem NO-Eliminierungsschritt und/oder dem vorgeschalteten Waschschritt zugeführt wird.

5. Verfahren gemäß mindestens einem der vorstehenden Ansprüche, **dadurch gekennzeichnet, dass** der NO-Eliminierungsschritt bei einer Temperatur von 10 bis 50°C und einem Druck von 10 bis 40bar, bevorzugt bei einem Druck von 20 - 27 bar, abläuft.

6. Verfahren gemäß mindestens einem der vorstehenden Ansprüche, **dadurch gekennzeichnet, dass** der Reduktionsschritt bei einer Temperatur von 50 bis 95°C und einem Druck von 10 bis 40 bar, bevorzugt bei einem Druck von 20 - 27 bar, abläuft.

7. Verfahren gemäß mindestens einem der vorstehenden Ansprüche, **dadurch gekennzeichnet, dass** der sauerstoffhaltige Gasstrom der Abgasstrom eines Oxyfuel-Prozesses ist.

8. Verfahren gemäß Anspruch 7, **dadurch gekennzeichnet, dass** in einem Membrantrennschritt mindestens ein Teil des im Abgasstrom enthaltenen Kohlendioxids durch eine Membran abgetrennt wird, bevor der sauerstoffhaltige Gasstrom im ersten Reduktionsschritt mit der Waschlösung in Kontakt gebracht wird.

9. Verfahren gemäß Anspruch 8, **dadurch gekennzeichnet, dass** der proximale Waschschritt vor dem Membrantrennschritt erfolgt.

10. Anlage zur Durchführung eines Verfahrens gemäß mindestens einem der vorstehenden Ansprüche, umfassend
- eine untere Gas-flüssig-Gegenstromkolonne mit einer unteren Gaszuleitung für einen Abgasstrom, einer in Richtung des Gasstroms hinter der Zuleitung angeordneten unteren Kontaktzone, einer unteren Waschlösungszuleitung für eine Ammoniak und Ammoniumsulfit enthaltende Waschlösung und einer in Richtung des Gasstroms hinter der Kontaktzone angeordneten ersten Gasableitung, sowie einer unteren Flüssigkeitsableitung,
- eine in Richtung des Gasstroms hinter der ersten Gasableitung angeordnete obere Gas-flüssig-Gegenstromkolonne mit einer oberen Waschlösungszuleitung für eine Ammoniak enthaltende Waschlösung, einer oberen Kontaktzone und einer oberen Flüssigkeitsableitung,
- wobei die obere Gas-flüssig-Gegenstromkolonne in einem für den Betrieb bei 10-50 Überdruck ausgelegten Druckbehälter angeordnet ist, und
- wobei die untere Flüssigkeitsableitung mit einer Vorrichtung zur thermischen Nitritzersetzung und/oder einer Vorrichtung zur Fällung von in der entnommenen Flüssigkeit enthaltenem Sulfat verbunden ist.

11. Anlage gemäß Anspruch 10, **dadurch gekennzeichnet, dass** die untere und die obere Gas-flüssig-Gegenstromkolonne im selben Druckbehälter angeordnet sind.

12. Anlage gemäß mindestens einem der Ansprüche 10 bis 11, **dadurch gekennzeichnet, dass** die obere und die untere Gas-flüssig-Gegenstromkolonne bei verschiedenen Temperaturen betrieben werden können.

13. Anlage gemäß mindestens einem der Ansprüche 10 bis 12, **dadurch gekennzeichnet, dass** die untere Waschzuleitung mit einer proximalen Gegenstromkolonne verbunden ist, welche eine proximale Gaszuleitung für einen Abgasstrom, einer in Richtung des Gasstroms hinter der Zuleitung angeordneten proximalen Kontaktzone, einer proximale Waschlösungszuleitung für eine Ammoniak enthaltende Waschlösung und einer in Richtung des Gasstroms hinter der proximalen Kontaktzone angeordneten proximalen Gasableitung, sowie einer proximalen Flüssigkeitsableitung aufweist, die mit der unteren Waschlösungszuleitung der unteren Kontaktzone verbunden ist, wobei das der proximalen Gasableitung der unteren Gaszuleitung zugeleitet wird.

14. Anlage gemäß Anspruch 10, **dadurch gekennzeichnet, dass** die Vorrichtung zur Fällung von in der entnommenen Flüssigkeit enthaltenem Sulfat mit der unteren Waschlösungszuleitung so verbunden ist, dass die nach der Fällung von enthaltenem Sulfat anfallende Lösung der unteren Gegenstromkolonne zugeführt werden kann.

15. Anlage gemäß mindestens einem der Ansprüche 10 bis 13, wobei die Vorrichtung zur Fällung von in der entnommenen Flüssigkeit enthaltenem Sulfat mit der proximalen Waschlösungszuleitung so verbunden ist, dass die nach der Fällung von enthaltenem Sulfat anfallende Lösung der proximalen Gegenstromkolonne zugeführt werden kann.
